(19) Europäisches Patentamt
European Patent Office
Office européen des brevets

(11) **EP 2 157 751 A1**

(12) **EUROPEAN PATENT APPLICATION**

(43) Date of publication:
**24.02.2010 Bulletin 2010/08**

(51) Int Cl.:
**H04L 25/02** (2006.01)

(21) Application number: **08105104.7**

(22) Date of filing: **22.08.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Nokia Siemens Networks OY**<br>**02610 Espoo (FI)** | (72) Inventors:<br>• **Trivonov, Peter**<br>  **194021, Saint-Petersburg (RU)**<br>• **Zirwas, Wolfgang**<br>  **81249, München (DE)**<br><br>(74) Representative: **Bruglachner, Thomas E.**<br>**Nokia Siemens Networks Oy**<br>**COO RTP IPR / Patent Administration**<br>**80240 Munich (DE)** |

(54) **Channel re-estimation in communication systems**

(57)    It is described a communication system having a transmitter and a receiver communicating over a channel. The estimated channel state information can be improved by channel reestimation while taking into account correctly decoded symbols as pilot symbols. Computational problems may be avoided by rotating the symbols on the diagonals of the matrix of the symbols to be transmitted so as to ensure that the matrix is a full-rank matrix. On the receiver side the symbol rotation is inverted, thus yielding the original symbols.

FIG 1

**Description**

Field of invention

The present invention relates to the field of signal transmission. In particular, the present invention relates to orthogonal frequency division multiplexing (OFDM) communication systems.

Art Background

Orthogonal frequency division multiplexing (OFDM) is considered to be the key technological component of modern and next-generation wireless systems. Efficient utilization of the available bandwidth requires the receiver to perform channel estimation. However, the state of wireless channel can change rapidly, introducing thus some inaccuracy into the estimated channel state information (CSI), which in turn decreases the probability of successful data decoding.

Automatic repeat request (ARQ) is a standard technique used in communication systems in order to implement reliable data delivery. Hybrid ARQ denotes a combination of some forward error correction method and retransmission protocol, which is invoked if decoding of the received data fails.

In view of the above-described situation, there exists a need for an improved technique that enables to improve data decoding, while substantially avoiding or at least reducing one or more of the above-identified problems.

Summary of the Invention

The invention relates to methods and devices according to the independent claims. Advantageous embodiments are described by the dependent claims.

The probability of successful decoding of a data block transmitted over a frequency selective channel depends on the quality of the channel state information (CSI) available at the receiver. The CSI quality can be characterized by the mean squared channel estimation error (MSE). The method described in the present invention report reduces the MSE, improving thus the probability of successful data decoding.

According to a first aspect of the herein disclosed subject matter, there is provided a method for operating a signal receiver, the method comprising (i) receiving encoded signals over a channel, (ii) if possible, decoding said encoded signals by using available channel state information, thereby generating successfully decoded signals, and (iii) performing a channel re-estimation by taking into account at least part of said successfully decoded signals as pilot signals, thereby generating a re-estimated channel state information.

Herein, the term signals includes generally signals for transmitting information, e.g. for transmitting payload data and training signals. According to illustrative embodiments, the term signals includes symbols of modulation schemes, a plurality of which is known in the art.

The first aspect of the herein disclosed subject matter is based on the idea that the mean squared channel estimation error can be reduced at least in some constellations by considering the correctly decoded data signals (e.g. data symbols) as pilot ones.

According to an illustrative embodiment, the method according to the first aspect further comprises re-equalizing the encoded signals corresponding to not successfully decoded signals by using the re-estimated channel state information.

According to a further illustrative embodiment, the method further comprises retrying decoding of encoded signals which have not been successfully decoded. Hence the number of successfully decoded signals may be increased without retransmission.

According to a further illustrative embodiment, the encoded signals are data blocks obtained by orthogonal frequency division multiplexing (OFDM) which uses a plurality of subcarriers.

Channel re-estimation may be performed in a number of ways. According to a further illustrative embodiment, the channel re-estimation is performed by using least square estimates of a subcarrier transfer factor of said plurality of subcarriers. According to a further illustrative embodiment, the method further comprises said channel re-estimation is performed by using a minimum mean squared error estimate of a subcarrier transfer factor of said plurality of subcarriers.

According to a further illustrative embodiment, the method further comprises performing said channel re-estimation by using a submatrix of a (full) discrete Fourier transform matrix. In an illustrative embodiment, said submatrix consists of L + 1 columns and rows $\pi_1, \pi_2, ..., \pi_l$, $\tau_1, \tau_2, ..., \tau_m$. Herein, L is a duration of a channel impulse response, e.g. in multiples of a symbol duration. $\pi_1, \pi_2, ..., \pi_l$ denote the pilot subcarriers of said plurality of subcarriers used for transmitting pilot symbols, and $\tau_1, \tau_2, ..., \tau_m$ denote the subcarriers of said plurality of subcarriers on which the successfully decoded data blocks have been received and which are taken into account for channel re-estimation.

According to a further illustrative embodiment, the method further comprises determining a matrix of reconstructed symbols for each subcarrier of said plurality of subcarriers and rotating the symbols on the diagonals of said matrix of reconstructed symbols by predetermined rotation factors.

According to a second aspect of the herein disclosed subject matter, a method for operating a signal transmitter is provided, the method comprising (I) providing signals to be transmitted in the form of a matrix of complex symbols, and (II) rotating said complex symbols on the diagonals of said matrix so as to cause said matrix to be a full rank matrix.

Accordingly, having again regard to the first aspect, the respective illustrative embodiment of a method according to the first aspect further comprises rotating the symbols on the diagonals of said matrix of reconstructed symbols by predetermined rotation factors so as to apply the inverse transformation of the transformation (II) of the second aspect.

According to a further illustrative embodiment, rotating said complex symbols comprises rotating said complex symbols so as to reduce a sum over the inverse singular values of said matrix of complex symbols.

According to a further illustrative embodiment, the rotating said complex symbols comprises rotating said complex symbols so as to increase a determinant of said of said matrix of complex symbols.

According to a still further illustrative embodiment, the method further comprises providing a predetermined rotation factor for each diagonal of said matrix of complex symbols and rotating said complex symbols of each diagonal by the respective predetermined rotation factor. According to a further illustrative embodiment, each rotation factor is determined by taking into account a plurality of possible symbol combinations to be transmitted. For example, said plurality of possible symbol combinations may be a predetermined number of representative symbol combinations. According to another example, the plurality of possible symbol combinations includes all possible symbol combinations. According to an embodiment, the matrix of complex symbols to be transmitted is a square matrix. According to a further embodiment, the matrix of complex symbols to be transmitted is a non-square matrix.

According to a further illustrative embodiment, said predetermined rotation factors are adapted to minimize a maximum of a plurality of sums of which each sum is a sum over the inverse singular values of a matrix corresponding to a respective one of said plurality of possible symbol combinations to be transmitted.

According to a further illustrative embodiment, said predetermined rotation factors are adapted to maximize a minimum of a plurality of determinants of which each determinant is the determinant of a matrix corresponding to a respective one of said plurality of possible symbol combinations to be transmitted.

For example, if the plurality of possible symbol combinations include all possible symbol combinations, the latter embodiment corresponds to an improvement of the "worst case".

According to a further illustrative embodiment, the method further comprises said transmitter having n transmit antennas and a frame of transmitted symbols comprising $l$ consecutive symbols, where $l \geq n$. This corresponds to an $n \times l$ matrix of symbols to be transmitted within the frame. According to a further illustrative embodiment, the method further comprises partitioning said matrix of symbols to be transmitted within a frame into submatrices with n columns and using each of said submatrices as said matrix of complex symbols (i.e. performing one or more of the respective, herein discloses operations on said submatrices) in the case that the number of transmitted symbols in a frame is larger than the number of transmit antennas, $l > n$. Otherwise, according to a further illustrative embodiment, if $l = n$, the matrix of symbols to be transmitted is directly used as said matrix of complex symbols.

According to a third aspect of the herein disclosed subject matter a receiver for receiving signals over a channel is provided, the receiver being configured to carry out the method according to the first aspect or an embodiment thereof. According to an illustrative embodiment, the receiver comprises a controller for carrying out the method according to the first aspect or an embodiment thereof.

According to a fourth aspect of the herein disclosed subject matter a transmitter for transmitting signals over a channel is provided, the transmitter being configured to carry out the method according to the second aspect or an embodiment thereof. According to an illustrative embodiment, the transmitter comprises a controller for carrying out the method according to the first aspect or an embodiment thereof.

Although some aspects and embodiments of the herein disclosed subject matter are disclosed with regard to a transmitter and a receiver, respectively, it should be noted that in the case of bidirectional communication the respective entity (for instance a user equipment, e.g. a mobile station, or a network, e.g. a base station) may have transmitter and receiver capabilities. Hence each such entity may be regarded as a transmitter and as a receiver according to the wording used herein.

According to an illustrative embodiment, the predetermined rotation factors are determined offline. For example, the predetermined rotation factors may be implemented during manufacture of a transmitter or a receiver. Further, the predetermined rotation factors may be implemented in a receiver or in a transmitter by way of a software update or a firmware update.

According to an illustrative embodiment, the receiver and the transmitter are components of a wireless system. According to another illustrative embodiment, the receiver and the transmitter are components of a wired system.

In the following there will be described exemplary embodiments of the subject matter disclosed herein with reference to a method for operating a signal receiver and a method for operating a signal transmitter. It has to be pointed out that of course any combination of features relating to different aspects of the herein disclosed subject matter is also possible. In particular, some embodiments have been described with reference to apparatus type claims whereas other embodiments have been described with reference to method type claims. However, a person skilled in the art will gather from the above and the following description that, unless other notified, in addition to any combination of features belonging to one aspect also any combination between features relating to different aspects or embodiments, for example even between features of the apparatus type claims and features of the method type claims is considered to be disclosed with this application.

The aspects and embodiments defined above and further aspects and embodiments of the present invention are apparent from the examples and embodiments to be described hereinafter. The invention will be described in more detail hereinafter with reference to examples and embodiments but to which the invention is not limited.

Brief Description of the Drawings

Figure 1 shows schematically a flowchart of a method according to illustrative embodiments of the herein disclosed subject matter.

Figure 2 shows the angular components (arg function) of exemplary rotation factors $\phi_i$, $\psi_i$ and the respective minimum singular value $\mu_i$ for QPSK modulation and different numbers of transmit antennas (Tx antennas).

Figure 3 shows schematically a communication system including a transmitter and a receiver according to illustrative embodiments of the herein disclosed subject matter.

Figure 4 shows the performance of an ARQ system with channel re-estimation in terms of throughput over signal to noise ratio $E_S/N_0$.

Figure 5 shows the performance of an ARQ system with channel re-estimation in terms of MSE gain over signal to noise ratio $E_S/N_0$.

Detailed Description

The illustration in the drawings is schematic. It is noted that in different figures, similar or identical elements are provided with the same reference signs.

In order to facilitate understanding of aspects and embodiments of the herein disclosed subject matter, a conventional method for channel estimation is given. In an exemplary example a wireless multipath channel is considered. The received signal $r_i$ can be represented as

$$r_i = \sum_{k=0}^{L} s_{k-i} h_i + \hat{\eta}_i, \quad \hat{\eta}_i \sim N(0,\sigma^2), \quad E[h_i h_j^*] = \begin{cases} \phi_i^2, & i = j \\ 0, & i \neq j \end{cases},$$

where $s_i$ are the transmitted time-domain symbols and $h_i$ are channel impulse response taps. $\hat{\eta}_i$ denotes some noise which is defined as proportional to the normal distribution around zero with noise variance $\sigma^2$. $E[]$ denotes the expectation value. $\phi_i^2$ is the autocorrelation function of the channel impulse response.

If OFDM is used, the received signal $R_i$ on each subcarrier can be represented as

$$R_i = H_i S_i + \eta_i; \quad H_i = \sum_{j=0}^{n-1} h_j \omega^{ij}, \quad \omega = \exp(-j2\pi/n), \quad i = 0 \ldots n-1.$$

Again, $S_i$ are the transmitted time domain symbols. It can be seen that the received signal depends on unknown channel impulse response. However, its length $L$ is usually much smaller than the number of subcarriers $n$. This allows one to transmit some fixed training symbols on subcarriers $\pi_1, \pi_2,...,\pi_l$, obtain least squares estimates of subcarrier transfer factors for these subcarriers as $\tilde{H}_{\pi_i} = R_{\pi_i} S_{\pi_i}^{-1}$, where $S_{\pi_i}$ is the pilot signal, and perform interpolation as

$$(\hat{H}_0,...,\hat{H}_{n-1}) =$$
$$= F_{CL} diag(\phi_0^2,...,\phi_L^2) F_{PL}^* \left( F_{PL} diag(\phi_0^2,...,\phi_L^2) F_{PL}^* + \sigma^2 I \right)^{-1} \left( \tilde{H}_{\pi_1},...,\tilde{H}_{\pi_P} \right) \qquad (1)$$

where $F_{CL}$ is the submatrix of DFT matrix consisting of first $L+1$ columns, and $F_{PL}$ is the DFT submatrix consisting of rows $\pi_1, \pi_2, ..., \pi_l$, and first $L+1$ columns. The full N × N DFT matrix is given by

$$\begin{pmatrix} \mathrm{w}^0 & \mathrm{w}^0 & \mathrm{w}^0 & \mathrm{w}^0 & _{...} & \mathrm{w}^0 \\ \mathrm{w}^0 & \mathrm{w}^1 & \mathrm{w}^2 & \mathrm{w}^3 & _{...} & \mathrm{w}^{N-1} \\ \mathrm{w}^0 & \mathrm{w}^2 & \mathrm{w}^4 & \mathrm{w}^6 & _{...} & \mathrm{w}^{2(N-1)} \\ \vdots & & & & & \\ \mathrm{w}^0 & \mathrm{w}^{n-1} & \mathrm{w}^{2(N-1)} & \mathrm{w}^{3(N-1)} & _{...} & \mathrm{w}^{(N-1)(N-1)} \end{pmatrix}$$

where w = exp(-2πj/N),j·j=-1 and N is the number of subcarriers in the OFDM system. The number of pilot subcarriers $l$ and the values of the training symbols are usually fixed. The accuracy of the obtained channel estimated can be characterized by mean squared error, which is defined as

$$\varepsilon = E\left[ \frac{1}{n} \sum_{i=1}^{n} \left\| \hat{H}_i - H_i \right\|^2 \right].$$

It depends on the number of pilot subcarriers $l$, channel impulse response duration $L$, its autocorrelation $\phi(i) = \phi_i^2$, and signal-to-noise ratio. In general, increasing the number of pilot subcarriers reduces MSE, but leaves less space for transmission of the payload data.

This approach can be extended to the case of multiple antennas at the transmitter and receiver. In this case subcarrier transfer factors $H_i$ become $m \times n$ matrices, where $m$ and $n$ are the number of antennas at the receiver and transmitter, respectively. Obtaining an estimate for them requires, in general, transmitting more than one training symbol over each pilot subcarrier, i.e. $S_{\pi_i}$ should be an $n \times s$ matrix. It is strongly desired to impose orthogonality constraint on rows of this matrix in order to avoid noise amplification in least squares estimate $\tilde{H}_{\pi_i} = R_{\pi_i} S_{\pi_i}^{-1}$, where $S_{\pi_i}^{-1}$ is the pseudoinverse of $S_{\pi x_i}$.

Implementing reliable data delivery over a wireless link requires to employ ARQ, i.e. transmit some additional redundancy if the receiver is not able to recover the transmitted data from the received signals. In the simplest case this can be a repetition of the original data, but more sophisticated implementations are also possible. In many cases it is beneficial to employ multi-channel ARQ, i.e. transmit symbols corresponding to different data units within the same OFDM symbol, and perform retransmissions for them independently.

The standard way to implement the receiver for an OFDM system with ARQ is as follows:

1. Perform channel estimation
2. Use the obtained CSI to perform equalization of the received signals
3. Try to decode the received data blocks
4. If decoding fails, send negative acknowledgement to the transmitter.

The problem addressed by illustrative embodiments of the herein disclosed subject matter is reducing the channel estimation error in MIMO-OFDM systems with multi-channel ARQ.

It is a common situation in a multi-channel ARQ system, where some of the data blocks received within the same OFDM symbol (or group of $l$ consecutive symbols denoted by frame) are decoded successfully, while others fail, requiring thus sending negative acknowledgement and waiting for additional redundancy. It may happen that this failure is caused by imperfect channel state information and poor equalization.

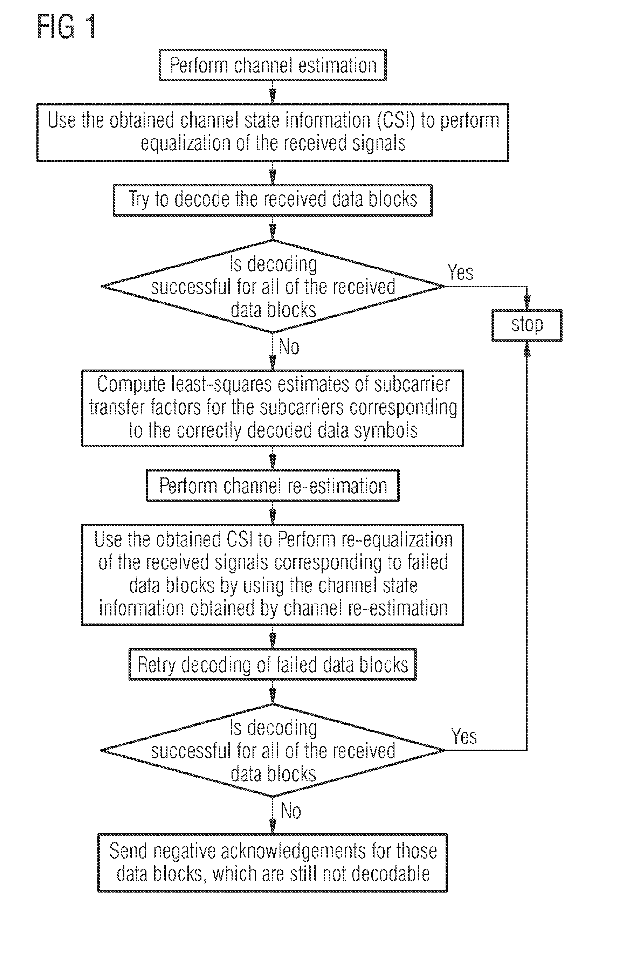

The quality of channel state information may be improved by increasing the number of subcarriers used in the interpolation formula (1). In accordance with illustrative embodiments disclosed herein, correctly decoded data symbols are considered as pilot ones. An illustrative embodiment of the method performed at the receiver is depicted in the flowchart in Fig. 1. Hence, the receiver employs the following algorithm, wherein each frame consists of $l$ OFDM symbols:

1. Perform channel estimation using equation (1)
2. Use the obtained CSI to perform equalization of the received signals
3. Try to decode the received data blocks. If decoding is successful for all of them, stop.

4. Compute least-squares estimates $\tilde{H}_{\tau_i} = R_{\tau_i} S_{\tau_i}^{-1}$ for the subcarriers $\tau_1$, ..., $\tau_m$ corresponding to the correctly decoded data symbols. Here $S_{\tau_i}$ is a n$\times l$ matrix consisting of reconstructed symbols, which were transmitted on subcarrier $\tau_i$, $S_{\tau_i}^{-1}$ is the $l \times n$ matrix such that $S_{\tau_i} S_{\tau_i}^{-1} = I$, and $R_{\tau_i}$ is the $m \times l$ matrix corresponding to the signals received on this subcarrier, and $l \geq n$ is assumed.

5. Perform channel re-estimation using the expression

$$(\hat{H}_0, ..., \hat{H}_{n-1}) =$$
$$= F_{CL} diag(\phi_0^2, ..., \phi_L^2) F_{QL}^* \left( F_{QL} diag(\phi_0^2, ..., \phi_L^2) F_{QL}^* + \sigma^2 I \right)^{-1} \left( \tilde{H}_{\pi_1}, ..., \tilde{H}_{\pi_P}, \tilde{H}_{\tau_1}, ..., \tilde{H}_{\tau_m} \right)$$

$$(2)$$

where $F_{QL}$ is the submatrix of DFT matrix, consisting of first $L+1$ columns, and rows $\pi_1, \pi_2, ..., \pi_l, \tau_1, \tau_2, ..., \tau_m$ in the appropriate order.

6. Use the obtained CSI to perform re-equalization of the received signals, corresponding to failed data blocks
7. Retry decoding of failed data blocks
8. Send negative acknowledgements for those data blocks, which are still not decodable.

Steps 4-7, which constitute the difference of the proposed method with respect to the standard one, can be performed iteratively. However, it has been found that in practice this does not provide considerable gain in most cases. The approach requires that each subcarrier within a frame is occupied by at most one retransmission unit, since otherwise some elements of $S_{\tau_i}$ may be unknown due to decoding errors.

It is possible to reduce the computational complexity by considering only at most U correctly decoded data blocks in (2), wherein U is a predetermined number.

Invoking steps 4-7 increases frame processing time. Since this happens only for some frames (i.e. those where not all data blocks are decoded correctly), the amount of time needed by the receiver to process each frame may vary significantly. This is a characteristic of the channel re-estimation methods.

One problem with the approach in steps 4-7 is that for $n \geq 1$ there exist combinations of symbols, such that the matrix $S_{\tau_i}^{-1}$ does not exist. For example, this happens if all elements of $S_{\tau_i}$ are the same. Even if inverse of the transmitted symbol matrix does exist, the norm of the estimation error is proportional to the norm of $S_{\tau_i}^{-1}$, which may be quite high.

This problem can be mitigated by replacing the LS estimate with MMSE estimate, i.e. $\tilde{H}_{\tau_i} = R_{\tau_i} S_{\tau_i}^H \left( S_{\tau_i} S_{\tau_i}^H + \sigma^2 I \right)^{-1}$.

This approach can be considered as an instance of Tikhonov regularization. However, it still fails in the high-SNR region, where the noise variance $\sigma^2$ is small.

According to an illustrative embodiment, this problem is avoided by ensuring that the matrix $S_{\tau_i}$ of symbols transmitted over each subcarrier is always a full-rank one. For the sake of simplicity, assume that $l=n$. Furthermore, the subcarrier index will be omitted. Let $s_{11},...,s_{nn}$ be the symbols (drawn from e.g. QPSK constellation) to be transmitted. The actual signals being transmitted are constructed as

$$S = \begin{pmatrix} \phi_1 s_{11} & s_{12} & \cdots & s_{1,n-1} & \psi_1 s_{1n} \\ s_{21} & \phi_2 s_{22} & \cdots & \psi_2 s_{2,n-1} & s_{2n} \\ \cdots & \cdots & \cdots & \cdots & \cdots \\ s_{n-11} & \psi_{n-1} s_{n-1,2} & \cdots & \phi_{n-1} s_{n-1,n-1} & s_{n-1n} \\ \psi_n s_{n1} & s_{n2} & \cdots & s_{n-1,n-1} & \phi_n s_{nn} \end{pmatrix},$$

where $|\phi_i|=|\psi_i|=1$,
i.e. the symbols on the diagonals of the matrix are rotated. While in the depicted illustrative embodiment the matrix S is a square matrix, it should be understood that this is not necessarily the case. According to a further illustrative embodiment, the number of columns (i.e. the frame duration) is not less than the number of rows (i.e. the number of transmit antennas).
The rotation factors $\phi_i$, $\psi_i$ are selected as a solution of the following optimization problem:

$$(\phi_i, \psi_j) = \arg \min_{\phi_i, \psi_j} \max_{s_{ij}} \sum_{k=1}^{M} \frac{1}{\mu_k(s_{ij})}$$

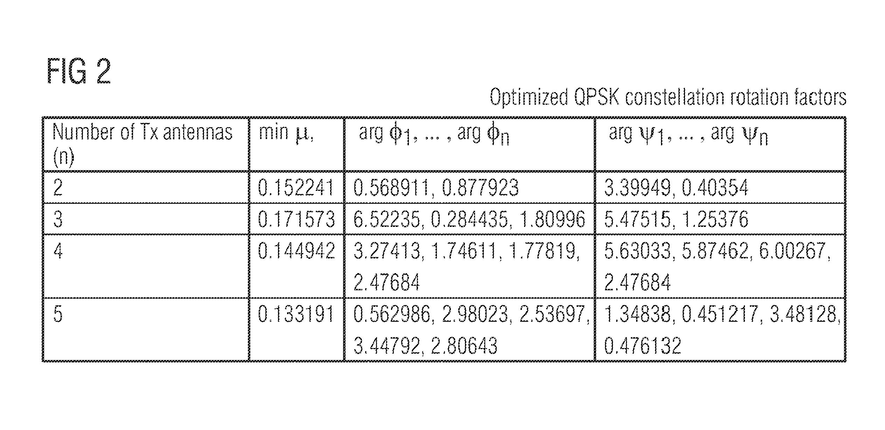

Here $\mu_k(s_{ij})$ denotes the $k$-th singular value of $S$. The objective function of this optimization problem is equal to the worst-case norm of $S^{-1}$. According to another illustrative embodiment, the above optimization problem is replaced with a maximization of the determinant of $S$, which is computationally easier.
The described problem is a non-convex one, but can be solved by running standard numeric optimization algorithms with different starting values. Optimized constellation rotation factors are shown in the table of Fig. 2. In particular, Fig. 2 shows the angular components (arg function) of the rotation factors $\phi_i$, $\psi_i$ and the respective minimum singular value $\mu_i$ for QPSK modulation and different numbers of transmit antennas (Tx antennas).
If frame duration $l$ exceeds the number of antennas, one can partition matrix S into a number of submatrices with $n$ columns, and apply the described transformation to each of them.
The receiver determines from the received signals a matrix of reconstructed symbols for each subcarrier of said plurality of subcarriers and rotating the symbols on the diagonals of said matrix of reconstructed symbols by predetermined rotation factors. Herein, the predetermined rotation factors at the receiver side implement the inverse transformation compared to the symbol rotation at the transmitter. Hence, according to an illustrative embodiment, the predetermined rotation factors at the receiver are $\dfrac{1}{\phi_i}$ and $\dfrac{1}{\psi_i}$. The rotation factors implemented on the receiver side are also referred to as inverse rotation factors in the following.
It should be noted that the proposed method does not affect neither the distance properties of the signal constellation, nor the power of the transmitted signal. If constellation rotation (e.g. symbol rotation) is used, constellation rotation factors $\phi_i$, $\psi_i$ must be published to ensure system interoperability.

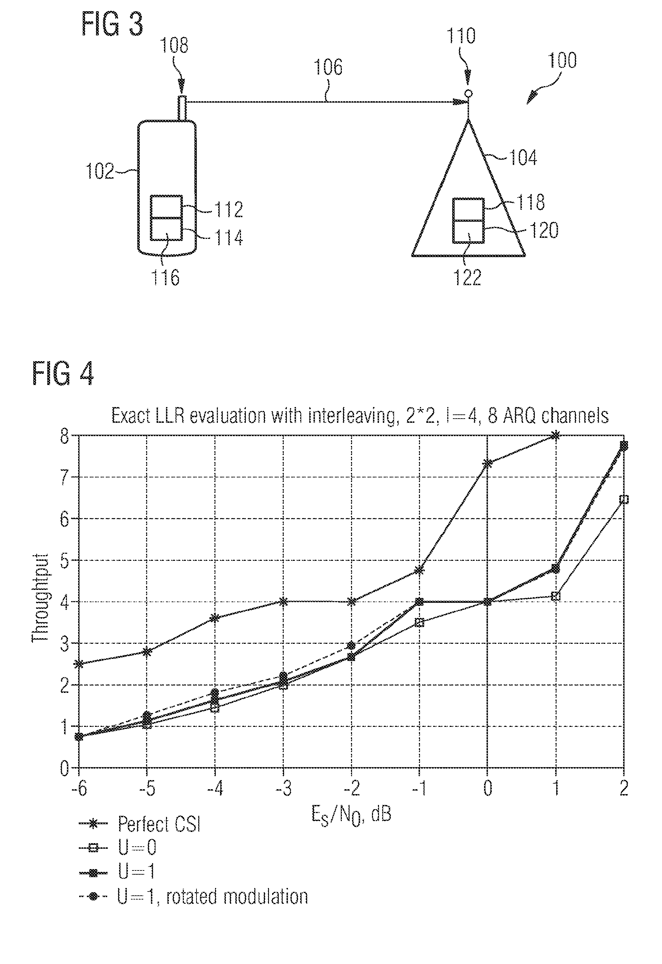

Fig. 3 shows in a schematic manner a communication system 100 having a transmitter and a receiver in accordance with illustrative embodiments of the herein disclosed subject matter.

The communication system comprises a mobile station 102 and a base station 104 in communication over a wireless channel 106. In the depicted exemplary constellation (uplink), the mobile station 102 acts as a transmitter 108 and the base station 106 acts as a receiver 110. However, it should be understood that for the downlink (not shown), the mobile station 102 acts as a receiver and the base station 104 acts as a transmitter. The mobile station 102 has a controller 112 for performing methods according to aspects, illustrative embodiments and examples of the herein disclosed subject matter. Further, the mobile station has a storage 114 for storing symbol rotation information 116, e.g. the rotation factors $\phi_i$, $\psi_i$. Likewise, the base station 104 has a controller 118 for performing methods according to aspects, illustrative embodiments and examples of the herein disclosed subject matter and further comprises a storage 120 for storing symbol rotation information 122.

In the uplink, the mobile station 102 performs symbol rotation as described above (e.g. according to the first aspect of the herein disclosed subject matter). The base station (which acts as receiver in the uplink) performs the inverse transformation and considers at most U correctly decoded symbols as pilot ones, as discussed above in detail (e.g. according to the second aspect of the herein disclosed subject matter).

The rotation information 116, 122 stored in the storages 114, 120 of the transmitter and the receiver may include the rotation factors $\phi_i$, $\psi_i$, the inverse rotation factors $(\phi_i)^{-1}$, $(\psi_i)^{-1}$ or both. If one of the rotation factors or the inverse rotation factors is not stored in the receiver/transmitter these non-stored factors may be calculated from the stored rotation information by the receiver/transmitter, i.e. by the mobile station or by the base station.

According to an illustrative embodiment, at least one of the rotation factors and the inverse rotation factors are published in the protocol specification of the protocol used by the transmitter and the receiver.

In order to prove the advantages of the proposed method in an exemplary example, the described channel re-estimation algorithm was applied in an MIMO-OFDM system with multi-channel stop-and-wait type-II hybrid ARQ based on (960,480) LDPC code and QPSK modulation. However, it should be noted that this constellation is used only for illustrative purposes and that any other coding scheme and ARQ protocol can be used here. CRC-32 checksum was appended to each data block before encoding with LDPC code. Each codeword was partitioned into six blocks, which were considered as retransmission units. 64 out of 1024 OFDM subcarriers were reserved for transmission of pilot signals. $l$=4 consecutive OFDM symbols were grouped into a frame. Walsh-Hadamard sequences of length four (4) were transmitted on pilot subcarriers. The symbols corresponding to different retransmission units and different ARQ channels were interleaved and mapped onto non-pilot subcarriers. Exact LLR evaluation at the receiver was used.

Fig. 4 illustrates the performance of the proposed method. Shown is the result of an exact logarithmic likelihood ratio (LLR) evaluation with interleaving, $l$=4 and 8 ARQ channels. A WSSUS channel model was used with $L$=50, the number of antennas at transmitter and receiver was set to $n$=$m$=2. The results are reported in terms of system throughput, which is defined as the average number of payload data blocks successfully transmitted within one frame. It can be seen that channel estimation errors cause up to 3 dB performance loss compared to the case of perfect CSI. However, enabling channel re-estimation (i.e. the number U of at most considered correctly decoded data blocks is one or more, U>0) provides up to 0.5 dB performance gain. Furthermore, the above described constellation rotation method provides additional 0.3 dB gain in low-SNR region.

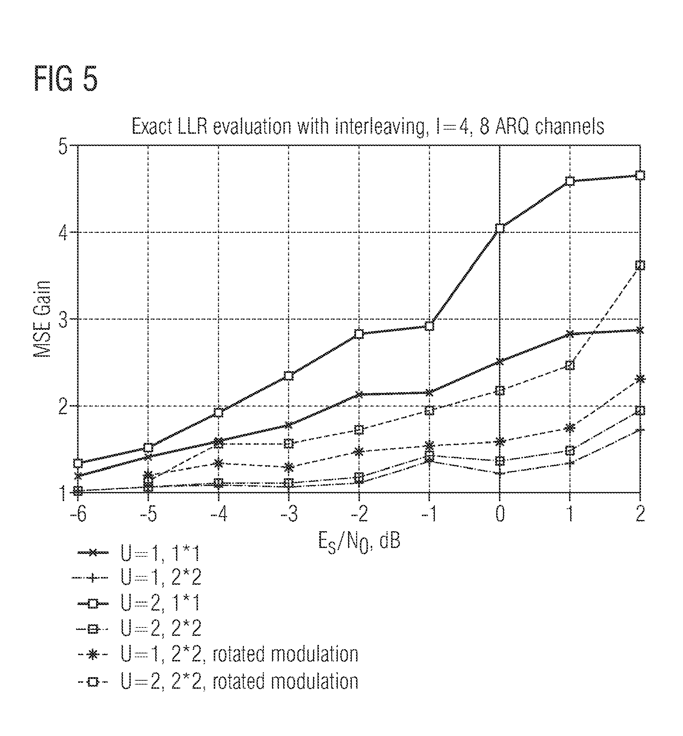

Fig. 5 illustrates similar results in terms of MSE gain, which is defined as the ratio of mean squared channel estimation error obtained with equation (1), and MSE after channel re-estimation. It can be seen that the constellation rotation provides quite significant gain compared to pure MMSE method, and the gain increases with the number of ARQ channels U used for channel re-estimation.

According to embodiments of the invention, any component for implementing a method according to aspects and illustrative embodiments of the herein disclosed subject matter, e.g. for symbol rotation at the receiver or symbol rotation at the transmitter may be provided in the form of respective computer program products which enable a processor to provide the functionality of the respective elements as disclosed herein. According to other embodiments, any these components may be provided in hardware. According to other - mixed - embodiments, some components may be provided in software while other components are provided in hardware.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:

A communication system having a transmitter and a receiver communicating over a channel is described. The channel may be a wireless or a wired channel. The estimated channel state information can be improved by channel re-estimation while taking into account correctly decoded symbols as pilot symbols. Computational problems may be avoided by rotating the symbols on the diagonals of the matrix of the symbols to be transmitted so as to ensure that the matrix is a full-rank matrix. On the receiver side the symbol rotation is inverted, thus yielding the original symbols.

List of reference signs

| 100 | communication system |
|-----|----------------------|
| 102 | mobile station |
| 104 | base station |
| 106 | channel |
| 108 | transmitter |
| 110 | receiver |
| 112 | controller |
| 114 | storage |
| 116 | rotation information |
| 118 | controller |
| 120 | storage |
| 122 | rotation information |

List of abbreviations

| ARQ | automatic repeat request |
|------|--------------------------|
| CSI | channel state information |
| DFT | discrete Fourier transform |
| LDPC | low density parity check code |
| LLR | logarithmic likelihood ratio |
| LS | least squares estimate |
| MIMO | multiple input multiple output |
| MSE | mean squared channel estimation error |
| MMSE | minimum mean squared error |
| OFDM | orthogonal frequency division multiplexing |
| SNR | signal to noise ratio |
| QPSK | quadrature phase shift keying |

**Claims**

1. Method for operating a signal receiver (110), the method comprising:

   - receiving encoded signals over a channel (106);
   - if possible, decoding said encoded signals by using available channel state information, thereby generating successfully decoded signals;
   - performing a channel re-estimation by taking into account at least part of said successfully decoded signals as pilot signals, thereby generating a re-estimated channel state information.

2. Method according to claim 1, further comprising:

   - re-equalizing the encoded signals corresponding to not successfully decoded signals by using the re-estimated channel state information;
   - retrying decoding of encoded signals which have not been successfully decoded.

3. Method according to one of claims 1 to 2, wherein

   - the encoded signals are data blocks obtained by orthogonal frequency division multiplexing (OFDM) which uses a plurality of subcarriers; and
   - wherein said channel re-estimation is performed by using least square estimates of a subcarrier transfer factor of said plurality of subcarriers.

**4.** Method according to claim 1 or 2, wherein

- the encoded signals are data blocks obtained by orthogonal frequency division multiplexing (OFDM) which uses a plurality of subcarriers; and
- said channel re-estimation is performed by using a minimum mean squared error estimate of a subcarrier transfer factor of said plurality of subcarriers.

**5.** Method according to one of claims 3 or 4, further comprising

- said channel re-estimation being performed using a submatrix of a discrete Fourier transform matrix, wherein said submatrix consists of L + 1 columns and rows $\pi_1, \pi_2,...,\pi_l, \tau_1, \tau_2,...,\tau_m$; wherein
- L is duration of a channel impulse response
- $\pi_1, \pi_2,...,\pi_l$ denote the pilot subcarriers of said plurality of subcarriers used for transmitting pilot symbols; and
- $\tau_1, \tau_2,...,\tau_m$ denote the subcarriers of said plurality of subcarriers on which the successfully decoded data blocks have been received and which are taken into account for channel re-estimation.

**6.** Method according to one of claims 3 to 5, further comprising:

- determining a matrix of reconstructed symbols for each subcarrier of said plurality of subcarriers;
- rotating the symbols on the diagonals of said matrix of reconstructed symbols by predetermined rotation factors.

**7.** Method for operating a signal transmitter (108), the method comprising:

- providing signals to be transmitted in the form of a matrix of complex symbols;
- rotating said complex symbols on the diagonals of said matrix so as to cause said matrix to be a full rank matrix.

**8.** Method according to claim 7, wherein rotating said complex symbols comprises rotating said complex symbols so as to reduce a sum over the inverse singular values of said matrix.

**9.** Method according to claim 7 or 8, wherein rotating said complex symbols comprises rotating said complex symbols so as to increase a determinant of said of said matrix.

**10.** Method according to one of claims 8 or 9, further comprising:

- providing a predetermined rotation factor for each diagonal of said matrix;
- each rotation factor being determined by taking into account a plurality of possible symbol combinations to be transmitted;
- wherein rotating said complex symbols comprises rotating said complex symbols of each diagonal by the respective predetermined rotation factor.

**11.** Method according to a combination of claim 10 and claim 8, wherein said predetermined rotation factors are adapted to minimize a maximum of a plurality of sums of which each sum is a sum over the inverse singular values of a matrix corresponding to a respective one of said plurality of possible symbol combinations to be transmitted.

**12.** Method according to a combination of claim 10 and claim 9, wherein said predetermined rotation factors are adapted to maximize a minimum of a plurality of determinants of which each determinant is the determinant of a matrix corresponding to a respective one of said plurality of possible symbol combinations to be transmitted.

**13.** Method according to one of claims 7 to 12, further comprising:

- said transmitter (108) having n transmit antennas;
- a frame of transmitted symbols comprising l consecutive symbols, where $l \geq n$, thus corresponding to an n x l matrix of symbols to be transmitted within the frame;
- partitioning said matrix of symbols to be transmitted within a frame into submatrices with n columns and using each of said submatrices as said matrix of complex symbols in the case that the number of transmitted symbols in a frame is larger than the number of transmit antennas , l > n.

**14.** Receiver (110) for receiving signals over a channel (106), the receiver (110) being configured to carry out the method according to one of claims 1 to 6.

**15.** Transmitter (108) for transmitting signals over a channel (106), the transmitter (108) being configured to carry out the method according to one of claims 7 to 13.

# FIG 1

# FIG 2

Optimized QPSK constellation rotation factors

| Number of Tx antennas (n) | min $\mu$, | arg $\phi_1$, ... , arg $\phi_n$ | arg $\psi_1$, ... , arg $\psi_n$ |
|---|---|---|---|
| 2 | 0.152241 | 0.568911, 0.877923 | 3.39949, 0.40354 |
| 3 | 0.171573 | 6.52235, 0.284435, 1.80996 | 5.47515, 1.25376 |
| 4 | 0.144942 | 3.27413, 1.74611, 1.77819, 2.47684 | 5.63033, 5.87462, 6.00267, 2.47684 |
| 5 | 0.133191 | 0.562986, 2.98023, 2.53697, 3.44792, 2.80643 | 1.34838, 0.451217, 3.48128, 0.476132 |

FIG 3

FIG 4

Exact LLR evaluation with interleaving, 2*2, l=4, 8 ARQ channels

- ---*--- Perfect CSI
- ---□--- U=0
- ---▣--- U=1
- -•- U=1, rotated modulation

# FIG 5

Exact LLR evaluation with interleaving, I=4, 8 ARQ channels

Legend:
- ✕ U=1, 1*1
- + U=1, 2*2
- □ U=2, 1*1
- □ U=2, 2*2
- ✱ U=1, 2*2, rotated modulation
- □ U=2, 2*2, rotated modulation

Y-axis: MSE Gain
X-axis: $E_S/N_0$, dB

**Europäisches Patentamt**
**European Patent Office**
**Office européen des brevets**

# EUROPEAN SEARCH REPORT

Application Number

EP 08 10 5104

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OKTAY URETEN ET AL: "Decision Directed Iterative Equalization of OFDM Symbols Using Non-Uniform Interpolation" VEHICULAR TECHNOLOGY CONFERENCE, 2006. VTC-2006 FALL. 2006 IEEE 64TH, IEEE, PI, 1 September 2006 (2006-09-01), pages 1-5, XP031051430 ISBN: 978-1-4244-0062-1 Sections III and IV.5, IV.6 * abstract * | 1-5,14 | INV. H04L25/02 |
| X | MEHMET KEMAL OZDEMIR ET AL: "CHANNEL ESTIMATION FOR WIRELESS OFDM SYSTEMS" IEEE COMMUNICATIONS SURVEYS, IEEE, NEW YORK, NY, US, vol. 9, no. 2, 1 April 2007 (2007-04-01), pages 18-48, XP011186984 ISSN: 1553-877X * abstract * * page 25 * * page 29 - page 30 * * page 35 * * page 41 * | 7,15 | |
| A | | 6,8-13 | TECHNICAL FIELDS SEARCHED (IPC) H04L |

The present search report has been drawn up for all claims

| Place of search | Date of completion of the search | Examiner |
|---|---|---|
| Munich | 13 May 2009 | Martínez Martínez, V |

EPO FORM 1503 03.82 (P04C01)